# EUROPEAN PATENT APPLICATION

(11) **EP 2 182 684 A1**
(43) Date of publication of application: **05.05.2010**
(21) Application number: 08305745.5
(22) Date of filing: 28.10.2008
(51) Int. Cl.: H04L 12/56

(54) **Packet scheduling method, system and device**

(71) Applicant: FRANCE TELECOM, 75015 Paris (FR)
(72) Inventor: Reynolds, Paul, Wells, BA5 1AT (GB); Chen, Xiaobao, Bath, BA2 6SQ (GB); Stidwell, Alan, Carnwall, PL30 4EG (GB)
(74) Representative: Attali, Pascal

(57) **Abstract**

Method for scheduling packets for transmission with respect to users (1'-3') over shared resource of a first subpart (N1) of a packet switched system. With respect to each user: information (DI) relating to at least one second subpart (N2,N3,IP) of the packet switched system over which packets are transmitted with respect to said user is obtained, a packet transmission delay over said at least one second subpart of the packet switched system being derivable from said information ; and it is determined, depending on the packet transmission delay derived from said information, a maximum time (DB) in which packets must be transmitted with respect to said user over the shared resource of said first subpart of the packet switched system.

## Description

The present invention relates to packet scheduling in packet switched system, for example mobile communication packet switched system.

For a long time, communications, especially delay intolerant calls (e.g.voice calls), have been supported by dedicated channels, implying reservation of specific resource in an access network, typically on a radio interface. For example, voice calls are supported on Dedicated Channels (DCH) in UMTS (Universal Mobile Telecommunications System) Release 99.

However, in packet switched systems, communication resource may be shared between a plurality of users. As an example, the current trend regarding radio resource management in mobile networks is to support all services (delay intolerant and delay tolerant) over a single transport channel per cell, shared by all users and applications. The main advantage of such an approach is to enable an optimal usage of available resources, avoiding useless resource reservation.

The sharing of communication resource between users implies the definition of a decision entity that is responsible for allocating the shared communication resource. This entity is usually located in the base station, although other locations are possible as well, and is called a scheduler or packet scheduler.

So the packet scheduler decides for each transmission time interval which user of the plurality should be served by receiving (downlink case) or transmitting a packet (uplink case) on the shared resource.

As an illustration, consider the so-called High-Speed Downlink Packet Access (HSDPA) that is an evolution of the UMTS and is based upon such a shared channel.

In HSDPA, the packet scheduler is implemented at the Node B. It thus decides, very close to the air interface, and for each transmission time interval TTI, the user (or his user equipment UE) to which downlink packets are to be transmitted over a shared transport channel called High Speed Downlink Shared Channel (HS-DSCH) which is controlled by the MAC-hs (Medium Access Control - high speed).

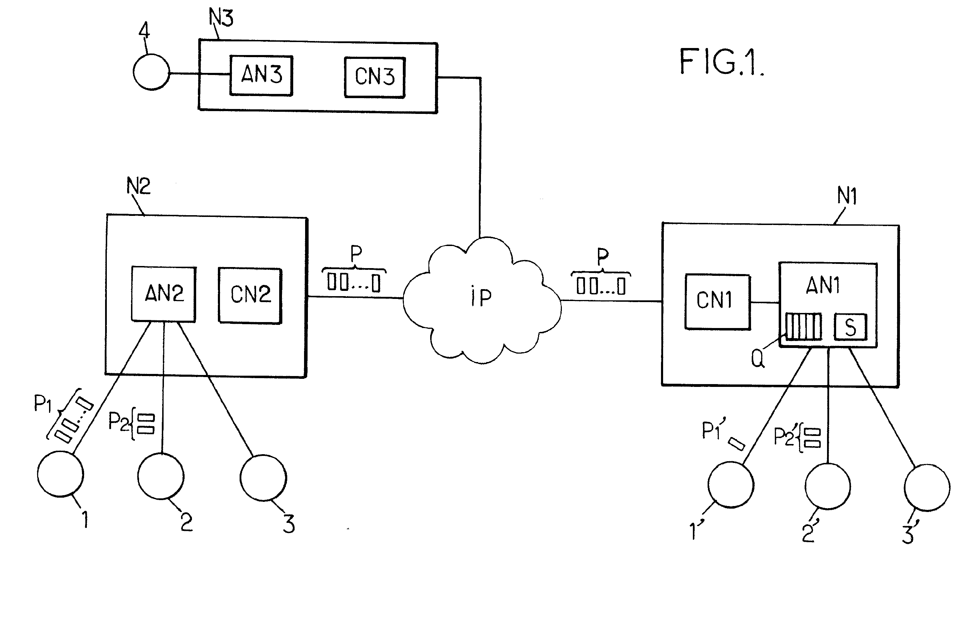

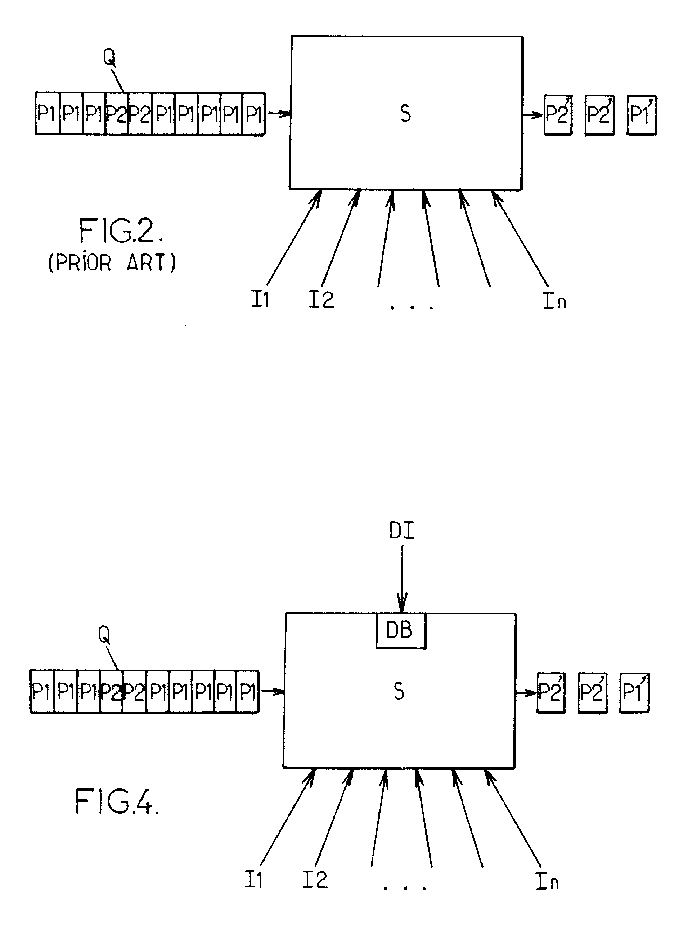

The general principle of a packet scheduler will now be detailed with reference to FIGs 1 and 2.

FIG.1 shows a packet switched system comprising several subparts. In this example, those subparts consist in three different networks N1, N2 and N3, interconnected through an IP backbone. Each network N1-N3 includes a respective access network AN1-AN3 and a respective core network CN1-CN3. The core networks CN1-CN3 are connected to the IP backbone, while the access networks AN1-AN3 are arranged for exchanging packets with users of the corresponding network (users 1'-3' for N1, users 1-3 for N2 and user 4 for N3).

The users of different networks may communicate which each other through the packet switched system. As an example, at a given time, the user 1 of N2 may send packets P1 to the user 1' of N1, while the user 2 of N2 may send packets P2 to the user 2' of N1. Those packets will then be transmitted over the transmission path source user-AN2-CN2-IP-CN1-AN1-target user.

On the other side, the user 1' of N1 may receive packets P1' from the user 1 of N2, while the user 2' of N1 may receive packets P2' from the user 2 of N2. Those packets are received after they have been transmitted over the transmission path source user-AN2-CN2-IP-CN1-AN1-target user.

Assuming that AN1 uses a shared transport channel for downlink transmission to the users 1'-3', it may comprise a packet scheduler S. The latter may be associated with a queue Q (or buffer) storing the packets received from CN1 temporarily.

As shown in FIG.2, the packet scheduler S will then decide, based on input information I1, I2,..., In which one of the users 1'-3' of N1 will be served for each transmission time interval TTI. Once the decision is made, it takes a packet intended to said user from the queue Q and transmits it to said user.

Note that, while the packet scheduler S described above schedules packet transmission over a downlink channel, it could be used alternatively or in addition to schedule packet transmission over an uplink channel.

Typical examples of input information I1, I2,..., In used for packet scheduling include :
- A queue status (how many packets are in the queue? how fast are the packets arriving?),
- Uplink feedback (e.g. CQI in HSDPA case or ACK/NACK information),
- QoS and user profile (who is the user? What type of service is the user allowed?), associated QoS parameters eg max delay, guaranteed bit rate, etc.
- User history (how long has user been waiting?),
- Traffic model,
- Available radio resources (power, codes in HSDPA case),
- UE capability
- Users subscription status e.g. gold, silver, bronze, etc.

The packet scheduler S may implement different scheduling strategies based on the input information I1, I2,...,In.

For instance, a typical packet scheduling strategy is the Round-Robin (RR) where users are served in sequential order so that they all get the same average allocation time. The RR scheduler is therefore often characterised as a blind scheduler.

In HSDPA, the high scheduling rate available facilitates advanced scheduling methods where resource allocation is conducted according to the current radio conditions. A significant increase in capacity can be obtained if channel dependent scheduling is employed: that is, the scheduler prioritises transmissions to terminals having favourable instantaneous channel conditions but also applies a fairness criteria so that users in poor conditions are not forgotten. Such a scheduler is the so-called proportional fair (PF) algorithm, where the UE with the highest priority metric is served at every TTI. The PF algorithm uses a-priori knowledge from the radio channel and, when there are a relatively large number of active users from which the scheduler can choose, provides multi-user diversity gain. The PF scheduling algorithm must however ensure that UEs in poor conditions are scheduled as well.

There are many more scheduling strategies, as will appear to one skilled in the art.

In any case, the time spent in the queue Q by the packets before they are delivered is critical.

Indeed, if packets are kept for too long a time in the queue Q, the resulting transmission delay may be unacceptable, especially when the transmission is done within the framework of a delay intolerant call, e.g. a voice call.

Also, this may prevent other packets from going into the queue which could lead to them being dropped. This may cause gaps in transmission, or necessitate re-transmissions of discarded packets, with respect to some users, which again may be unacceptable.

Conversely, if packets cannot be kept long enough in the queue Q, they may use the shared resource whilst other packets would have had better reasons to be transmitted at that time (e.g. because they have more favourable instantaneous channel conditions, or any other reason).

Also, preventing the packets from remaining long enough in the queue Q would lead to a non-optimal shared resource allocation.

So there is a need to improve packet scheduling so as to mitigate the above mentioned problems.

The invention thus proposes a method for scheduling packets for transmission with respect to users over shared resource of a first subpart of a packet switched system, the method comprising with respect to each user:
- obtaining information relating to at least one second subpart of the packet switched system over which packets are transmitted with respect to said user, a packet transmission delay over said at least one second subpart of the packet switched system being derivable from said information ; and
- determining, depending on the packet transmission delay derived from said information, a maximum time in which packets must be transmitted with respect to said user over the shared resource of said first subpart of the packet switched system.

Indeed, the inventors of the present invention have highlighted that transmission delay upstream from the packet scheduler has an influence on the acceptable time packets can wait before being transmitted over the shared resource.

Such upstream transmission delay can be derived from the obtained information relating to at least one second subpart of the packet switched system over which packets are transmitted with respect to said user. This obtained information may comprise an indication of the technology (e.g. an access technology) used in said at least one second subpart of the packet switched system. It may also comprise an indication of estimate, or default average, of a packet transmission delay over said at least one second subpart of the packet switched system. In the latter case, the packet transmission delay over said at least one second subpart of the packet switched system may be the obtained information itself.

The packet switched system may be a mobile communication packet switched system, and said first and second subparts may be access subparts of that system.

Depending on the packet transmission delay, a maximum time in which packets must be transmitted over the shared resource is determined and provided to packet scheduler according to the invention.

Besides, as different users served by the packet scheduler may communicate through different respective distant subparts of the system, the invention provides to determine the maximum time in which packets must be transmitted over the shared resource with respect to each user.

At least some of the packets scheduled for transmission with respect to users may be transmitted to the users and/or at least some of the packets scheduled for transmission with respect to users may be transmitted from the users.

At least some of the packets scheduled for transmission with respect to users may be transmitted within the framework of a voice call.

Advantageously, determining, depending on the packet transmission delay derived from said information, a maximum time in which packets must be transmitted with respect to said user over the shared resource of said first subpart of the packet switched system comprises subtracting said packet transmission delay from a reference maximum delay for transmission over the whole packet switched system.

The invention also proposes a packet switched system arranged for implementing the method as mentioned above.

The invention also proposes a packet scheduler for scheduling packets for transmission with respect to users over shared resource of a first subpart of a packet switched system according to the method as mentioned above, the packet scheduler comprising with respect to each user:
- means for obtaining information relating to at least one second subpart of the packet switched system over which packets are transmitted with respect to said user, a packet transmission delay over said at least one second subpart of the packet switched system being derivable from said information ; and
- a determination module for determining, depending on the packet transmission delay derived from said information, a maximum time in which packets must be transmitted with respect to said user over the shared resource of said first subpart of the packet switched system.

The invention also proposes a computer program product comprising code instructions arranged for carrying out the method as mentioned above, when loaded and run on computer means

The preferred features of the above aspects which are indicated by the dependent claims may be combined as appropriate, and may be combined with any of the above aspects of the invention, as would be apparent to a person skilled in the art.
- FIG.1 is a schematic representation of a packet switched system comprising several subparts ;
- FIG.2 is a schematic representation of the mode of operation of a packet scheduler according to prior art ;
- FIG.3 is a schematic representation of three different packet switched systems in which the invention can take place ;
- FIG.4 is a schematic representation of the mode of operation of a packet scheduler according to the invention ;
- FIGs 5 and 6 show exemplary signaling for transmission to the packet scheduler of information from which a packet transmission delay over at least one second subpart of a packet switched system can be derived.

The invention is illustrated here in an application of packet scheduling for transmission to users over shared resource of a first subpart of a packet switched system, i.e. in a downlink transmission case. Moreover, in the following, the transmission takes place within the framework of a voice call (e.g. VoIP).

It will be understood however that the principles of the invention would apply to an uplink transmission case as well, and/or within the framework of a service different from a voice call (e.g. data transmission).

With reference to the system of FIG.1 again, let us consider a voice call between the user 1 of N2 and the user 1' of N1. Within the framework of this voice call, the user 1 of N2 sends packets P1 which follow the transmission path source user 1-AN2-CN2-IP-CN1-AN1-target user 1' until they reach the user 1' in the form of packets P1' whose scheduling is made by the packet scheduler S of AN1.

On each portion of the transmission path AN2-CN2-IP-CN1-AN1, the transmitted packets are subjected to a respective transmission delay.

As highlighted by the inventors, those transmission delays depend on technologies used on said portions.

The delays may be fixed or variable. Fixed delay components add directly to the overall delay, while variable delays arise from queuing delays, for example, in the egress trunk buffers on the serial port connected to the access network and core / backbones (jitter).

There are several sources of delays. In particular, delays can be attributed to : codec (Compression) ; codec (Look Ahead) ; packetisation (accumulation) ; serialisation ; queuing (buffering) and/or network switching & transmission.

Codec compression delay is the time taken by the digital signal processor (DSP) to compress a block of digital samples. This is also called processing delay. This delay varies with the voice codec used and processor speed.

Concerning codec (Look Ahead) delay, the coder compression algorithm relies on known voice characteristics to correctly process sample block N. The algorithm must have some knowledge of what is in block N+1 in order to accurately reproduce sample block N. This look ahead is an additional delay.

Packetisation delay is the time taken to fill a packet payload with encoded / compressed speech. This delay is a function of the sample block size required by the codec and the number of blocks placed in a single frame. Packetisation delay can also be called accumulation delay, as the voice samples accumulate in a buffer before they are released.

Serialisation delay is the fixed delay required to 'clock' a frame onto the network interface. It is directly related to the clock rate on the digital trunk circuit. At low clock speeds and small frame sizes, the extra flag needed to separate frames is significant.

After the compressed voice payload is built, a header is added and the frame is queued for transmission on the network connection. Voice is given priority in the router / gateway. Therefore, a voice frame must only wait for either a data frame that already plays out, or for other voice frames ahead of it. Essentially, the voice frame waits for the serialisation delay of any preceding frames in the output queue.

Queuing delay is a variable delay and is dependent on the trunk speed and the state of the queue. There are random elements associated with the queuing delay. How one characterises the queuing delay is up to the network engineer.

Generally, one needs to design for the worst case scenario and then tune performance after the network is installed. The more voice lines granted access to the network, the higher the probability that the average voice packet waits in the queue. The voice frame, because of the priority structure, never waits behind more than one data frame.

Delays in the network switching and transmission can be attributed to core switching and IP transmission elements, e.g. Asynchronous Transfer Mode (ATM), Multi-Protocol Label Switching (MPLS) and Frame Relay (FR), and, the access network, e.g. UTRAN.

Delays from the IP Core and IP backbone are due to
- IP backbone network routing delay, and,
- IP Core underlying switching technology (FR or ATM) for the backhaul network, i.e. GSN - Node-B,
- Application Layer management of Voice Calls, e.g. using Real-time Transport Protocol (RTP)

IP Core Switching Delays comprise propagation and processing delays and queuing within the IP core network. Processing delays are mainly attributed to Node-B processing and comprises:
- Scheduling plus Hybrid Automatic Repeat-reQuest (HARQ) ;
- Radio Link Control (RLC) plus Media Access Control (MAC). These protocols are designed to avoid interference by scheduling nodes onto different subchannels that are divided either by time, frequency or orthogonal codes. As scheduled protocols they introduce a delay. The MAC layer delay can be classified into two categories: i) medium access delay, and ii) delay at interface queue (IFQ).

The voice call will also need management from an application layer. A typical application is RTP which allows for the detection of problems like packet loss, variable transport delays, out of sequence packet arrivals and asymmetric routing.

All those delays that may exist on the different portions of the transmission path AN2-CN2-IP-CN1-AN1 lead to an overall end-to-end transmission delay.

It is generally accepted that such end-to-end delay should be kept under a certain value, especially for real-time applications.

For voice calls in particular, as delays rise over a certain value, talkers and listeners become unsynchronised, and often they speak at the same time, or both wait for the other to speak. This condition is commonly called talker overlap. While the overall voice quality is acceptable, users sometimes find the stilted nature of the conversation unacceptably annoying.

According to ITU-G114, it is accepted that it is reasonable to plan networks to a maximum delay of 250ms for voice applications.

Of course, other overall maximum delay values may be used instead. In particular, a value different from 250 ms may be more suitable for other types of applications.

According to the invention, knowledge of delay in the transmission path is acquired and used by the packet scheduler in its packet scheduling algorithm.

This is done on a per user basis, as different users may communicate through different paths and thus may encounter different transmission delays.

In other words, for a packet scheduler scheduling packets for transmission with respect to users over shared resource of a first subpart of a packet switched system, information relating to at least one second subpart of the packet switched system over which packets are transmitted with respect to said user is obtained, a packet transmission delay over said at least one second subpart of the packet switched system being derivable from said information. And it is determined, depending on the packet transmission delay derived from said information, a maximum time in which packets must be transmitted with respect to said user over the shared resource of said first subpart of the packet switched system.

For example, with reference to FIG.1, the packet scheduler S of AN1 may obtain information relating to any portion of the transmission path AN2-CN2-IP-CN1-AN1 followed by the packets P1 sent by the user 1, and use a packet transmission delay derived from said information to schedule packets P1' for transmission to the user 1'.

This is illustrated in FIG.4, where, in addition to the input information I1, I2,..., In, the packet scheduler S obtains a further input information DI (for Delay Information). The packet scheduler S uses DI in its packet scheduling algorithm.

More precisely, for each user to be served, the packet scheduler S uses the corresponding DI to determine a maximum time DB (for Delay Budget) in which packets must be transmitted over the shared resource with respect to said user. So, a different maximum time DB may be defined with respect to different users.

In comparison with the packet scheduler S of FIG.2, the packet scheduler S of FIG.4 thus modifies the allocation of the shared resource, so that, for each user to be served, the packets received to his attention do not stay in the queue Q more than the corresponding maximum time DB.

The further input information DI may be any information from which an upstream packet transmission delay can be derived.

As a first example, DI may comprise an indication of a technology used in an upstream portion of the system, as typical transmission delays may be associated with different technologies. For instance, with reference to FIG.1, DI may comprise an indication of a technology used in N2 and/or in the IP backbone.

As a second example, DI may comprise an indication of an estimate of a packet transmission delay in an upstream portion of the system. In this case, DI refers to an actual delay. This actual delay may be measured with any suitable method, e.g. as described in WO2006/032890. For instance, with reference to FIG.1, DI may comprise an indication of an estimate of a packet transmission delay in N2 and/or in the IP backbone.

Of course, many other examples can be used in addition or in replacement, as will appear to one skilled in the art. In any case, a packet transmission delay over a subpart of the packet switched system should be derivable from DI.

The above mentioned maximum time DB in which packets must be transmitted over the shared resource with respect to a user is calculated by taking account of DI.

For example, when a reference maximum total delay MTD for transmission over the whole packet switched system can be defined, and when DI is obtained with respect to every upstream portion of packet switched system leading to the knowledge of delays introduced by each portion, the maximum time DB can be calculated by subtracting the delays derived from the obtained DI from MTD. In other words, DB = MTD - upstream portion relating delays (derived from DI).

It will be noted that the maximum time DB in which packets must be transmitted over the shared resource with respect to a user is a maximum value, and packets may of course be transmitted after a shorter time if needed.

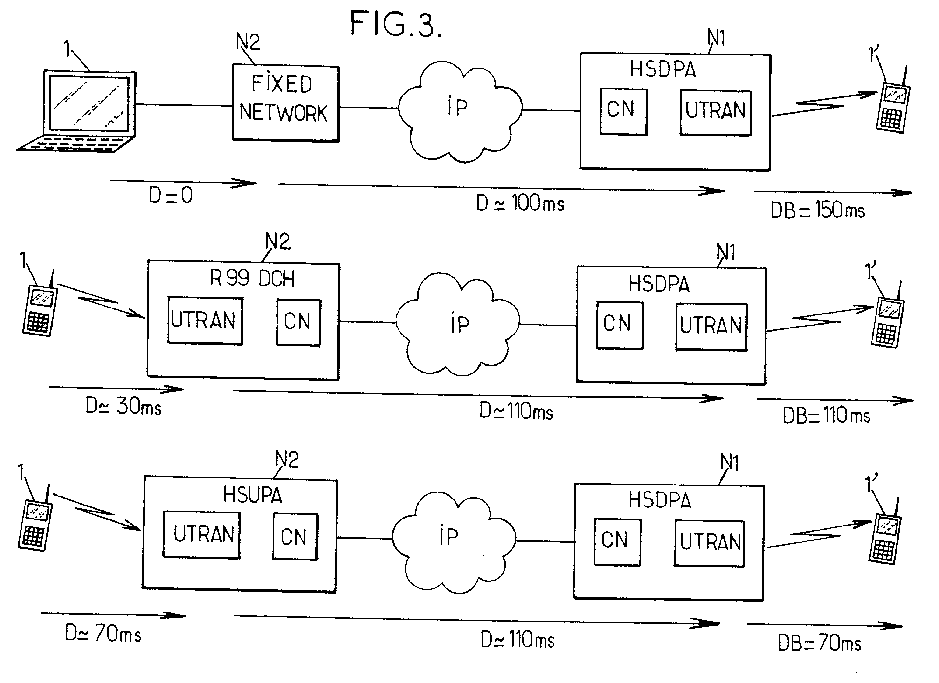

This is illustrated in FIG.3, where a voice call takes place in different packet switched systems.

FIG.3 shows a downlink transmission within the framework of said voice call, from the user 1 and the user 1' over a packet switched system comprising three different subparts : a network N2 to which the user 1 is connected, a network N1 to which the user 1' is connected, and an IP backbone between N1 and N2. In all three scenarios, in this example, the network N2 implements the HSDPA technology and includes a packet scheduler for transmission of packets to the user 1'.

The three scenarios of FIG.3 differ in that the network N1 implements different technologies : a fixed technology (e.g. DSL), UMTS Release 99 and HSUPA (High-Speed Uplink Packet Access) respectively.

All three fixed networks N2 have respective typical transmission delays that can be assumed or calculated. For instance, in this example, the fixed network generates almost no delay (D=0), while the UMTS Release 99 network has a delay around 30 milliseconds (D=30 ms) and the HSUPA network has a delay around 70 milliseconds ms (D=70 ms).

By obtaining an indication of the technology implemented in N2 or of the above mentioned delays (or any other relevant information), the packet scheduler of N1 can know the packet transmission delay in that subpart of the system.

Likewise, the packet scheduler of N1 may obtain the delay which occurs in the IP backbone, which may be supposed to be a static delay or which may result from an observation/calculation. In the example of FIG.3, the corresponding delay is around 100 milliseconds (D=100 ms) in the first scenario, and around 110 milliseconds (D=110 ms) in the second and third scenarios.

Assuming a maximum delay of 250 ms as recommended by the above mentioned G.114, the maximum time (in ms) in which packets intended to the user 1' must be transmitted over the shared resource of the HSDPA network N2 can be calculated as : DB = 250 - delay N1 - delay IP.

This leads to DB = 150 ms in the first scenario, DB = 110 ms in the second scenario and DB = 70 ms in the third scenario. So, it can be seen that the difference in DB for an HSDPA scheduler, whilst maintaining an end-to-end delay of 250 ms varies from 70 ms to 150 ms.

In synthesis, providing the access type information or the actual delay information to the packet scheduler enables it to improve the scheduling decision. Indeed, the maximum time permitted for transmitting the information over the radio interface of N2 has a direct impact on the communication quality (by preventing unacceptable delays) and/or on capacity (significant capacity gains can indeed be obtained by loosening delay constraints).

For instance the number of voice calls that could be supported with a delay constraint of 150 ms compared with a 70 ms constraint is likely to be at least of factor of about 2. So if all calls were made from a fixed network, the system capacity gain expected would be a factor of about 2 greater than if all calls were made from a HSUPA network.

In practice, there will be a mix of many different remote access networks as well as a mix of other traffic types sharing the same air interface resource. Nevertheless by facilitating access network differentiation on a per user per call basis, the system capacity to support the delay sensitive traffic as well as the other non delay sensitive traffic is still significantly increased. This is because the additional delay applied to those users that can handle it can be used by other additional users (both delay sensitive and non delay sensitive).

There are several possibilities to make the DI information available at the packet scheduler. One of them is to send DI by signalling to the packet scheduler. In this case, many possibilities could be used to achieve this goal.

The use of Session Initiation Protocol (SIP) signalling will be more particularly detailed in the following as a first example. But other protocols such as H323, RTP, other end-to-end protocols, specific protocols for respective portions of the transmission path, or a combination of any of those protocols may be used as will appear to one skilled in the art.

It is reminded that SIP is a session protocol used for negotiating contact between one or more entities. On its outward face SIP manifests itself as an application (User Agent). SIP messages are text based and readily extensible. SIP is not a data carrier. It is a means of negotiating contact and exchanging the necessary parameters to trigger applications.

A SIP message is in two parts: a Header and a Body. The header contains the identity of the originator and receiver, a call-ID, sequence number and subject fields. The body contains the session message (usually transported in SDP but not prescribed).

SIP is a stateless protocol, however state can be maintained if either TCP (Transmission Control Protocol) is used as its transport protocol, or, all messages are routed via a SIP Proxy Server: this Proxy Server may also provide services from this point using, for example: CGI scripts, PARLAY, JAIN, or CPL.

It is now assumed that a SIP session can be set up between entities of two subparts of a packet switched system, the first subpart of the system including the packet scheduler as explained above. Those entities are further assumed to be originating and destination base stations respectively.

A proxy server is used as a management intermediary between the originating and destination base stations. It may be associated with a database of SIP registered base stations or location server when acting also as a DNS (Domain Name System) server (for translating SIP URLs).

The proxy server can either be stateful or stateless.

There is no limit to the number of intermediate proxy servers in a message chain.

For transmission of the DI information from the originating base station to the destination base station including the packet scheduler, a typical message sequence procedure can be as follows.

The originating base station sends a SIP INVITE message to a 'stateful' proxy server. This INVITE message would contain the delay characteristics (DI) of the originating base station as a quality of service (QoS) marker.

This INVITE message is forwarded to the destination base station once the invitation request has been authenticated and, if necessary, the SIP URL of the destination base station has been translated into an IP address.

The INVITE message is then acknowledged (ACK) first by the destination base station and thence by the proxy server.

The QoS marker could carry a token used to authorise the reservation/transfer of DI at the destination base station.

Within the INVITE message, the DI can be included in a new field to be added to the SIP standard. It is also possible to reuse existing general headers, such as SUPPORTED or REQUIRED headers.

Alternatively, IETF Session Description Protocol (SDP) could be used in the INVITE message body. This already comes with an optional field for
- Bandwidth, 'b=modifier:bamdwidth-value' where the modifier is application specific (AS) and bandwidth-value is used to specify the bandwidth of the originating base station specified in kilobytes per second, e.g. 'b=AS:110'. Thus delay can be translated to bandwidth for each access type ;
- Attributes 'a=attribute-value' where attribute value is used to transport Real-time Transport Protocol (RTP) profiles, e.g. 'a=rtpmap:0 GSM/8000'.

As already mentioned, H323 may be used as an alternative of SIP for the transmission of DI as far as the packet scheduler.

H323 is a full session control protocol. It includes session creation, data transport and data plane session control.

H323 defines an architecture as well as a set of protocols: each element of the H323 network is defined and standardised. The main elements are:
- Terminals: this is an end device that originates and terminates media streams. At a minimum the terminal must support G711 Pulse Code Modulation (PCM) audio ;
- Gatekeepers: this is a server that controls a zone or administration domain. If a gatekeeper is present all terminals within that zone must register with and defer to the gatekeeper for subsequent authorisation decisions to take place ;
- Gateways: this interfaces the H323 network to another protocol network like CCITT#7 ;
- Multipoint control units: provide conference services for terminals.

H323 has the advantage in that it is well supported by equipment manufactures, but, it has that downside that it is intended for media negotiations and not control message exchanges. However, it can be implemented with a view to the exchange of pseudo-media messages such as delay characteristics (DI).

To do so, a suggested architecture would include a gatekeeper per access technology, i.e. access zone, and terminal devices of identical type (base stations) within that zone.

A typical message sequence procedure could be as follows, assuming that every base station has already been registered with its zone gatekeeper at system set-up.

The control message exchange begins with a H225 Registration, Admission and Status (RAS) Admission Request (ARQ) message between the originating base station and the access technology zone gatekeeper using TCP. This message contains the address of the destination base station.

The zone gatekeeper will identify that the requested base station is not within its own set of registered set of base stations and will forward the RAS message via a Gatekeeper-to-Gatekeeper signalling.

The destination zone gatekeeper responds with permission message (AFC) after if has confirmed that the destination base station is within its set of registered terminals. Note that if the destination gatekeeper cannot locate the destination base station or otherwise does not permit the data exchange, an Access Denial (AND) is sent instead.

The AFC message is delivered to the originating base station. Thence a Q931 SETUP message is sent from the originating base station to the destination base station.

This responds with an ALERTING and CONNECT message. Note that there is also an ARQ and AFC exchange between the terminating base station and its gatekeeper prior to responding ALERT.

These sequences of messages are not acknowledged or 'handshaked' as all are carried on TCP.

In contrast with the conventional procedure, in which there is then an exchange of messages containing the media capabilities of the originating and terminating terminals, in the embodiment proposed hereby, these messages are reworked to exchange originating base station delay characteristics (DI).

Finally, once the characteristics have been exchanged, one base station is nominated to be the master (e.g. the destination) and a channel opened for media transmission.

Another alternative application layer protocol for, among other things, transporting information about the capabilities of the end points, including the delay characteristics of the access technologies (DI) is the Real-time Transport Protocol (RTP).

The timestamp of the RTP header indicates the sampling time of the first sample of the first frame in the packet. The time is indicated as samples, i.e. frame length 20 ms and sampling rate 8 kHz mean that time stamp is advanced by 160 (samples) for each frame. All frames in a packet must be successive 20 ms frames; stored in the order they are generated by the encoder. The encoder shall set the marker bit (M) of the RTP header to value 1 for packets containing the first active speech frame after a non- speech period. For all other packets the marker bit is set to 0.

RTP multiplexing conserves bandwidth by placing multiple packets of voice information in a single datagram. This reduces the number of IP/UDP headers required for each audio packet. However, this leads to additional delay as the data can be sent only when multiple packets have been generated. Also, even a single datagram lost implies the loss of several audio packets.

In addition, RTP can allow for the end points (base stations in this example) to send each other quality reports like packet counts and jitter buffer status. It can also be used to send 'profiles' (current list is in IETF RFC1890 and includes, for example, GSM). Although GSM is the only current mobile voice codec defined, it is possible to expend this generic access technologies either standardised or by a proprietary extension to RTP type 3 'payload aka GSM'. These profiles are not exclusive to RTP and are also used in the SDP 'a=rtpmap' field as described above.

A combination of SIP and/or H323 and/or RTP would also be suitable for DI transmission purposes as will appear to one skilled in the art from what has been described so far.

The transmission of the information DI from an upstream subpart of the packet switched system may not necessarily use end-to-end protocols.

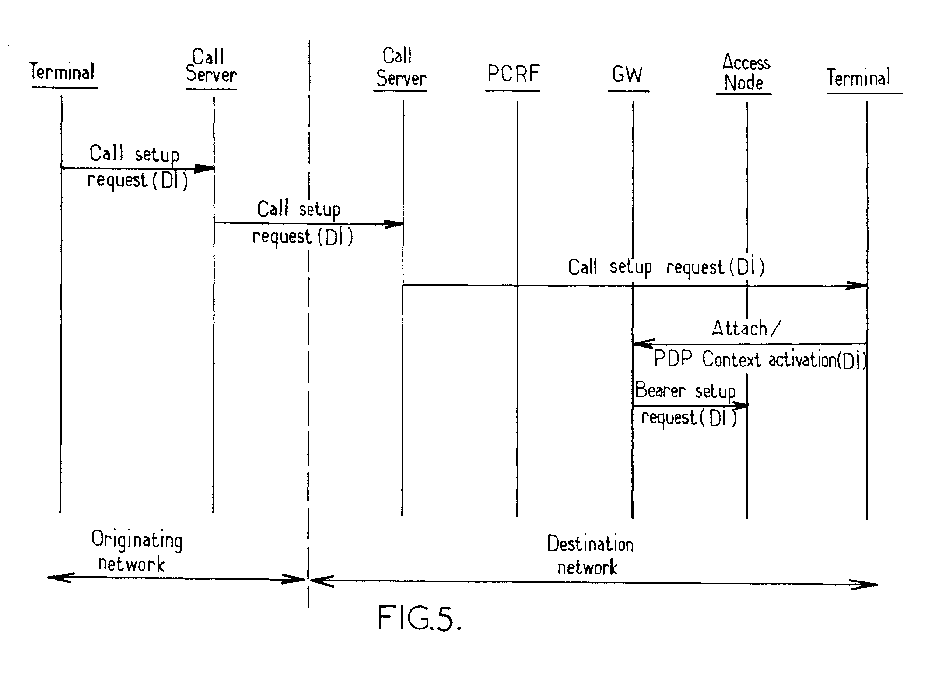

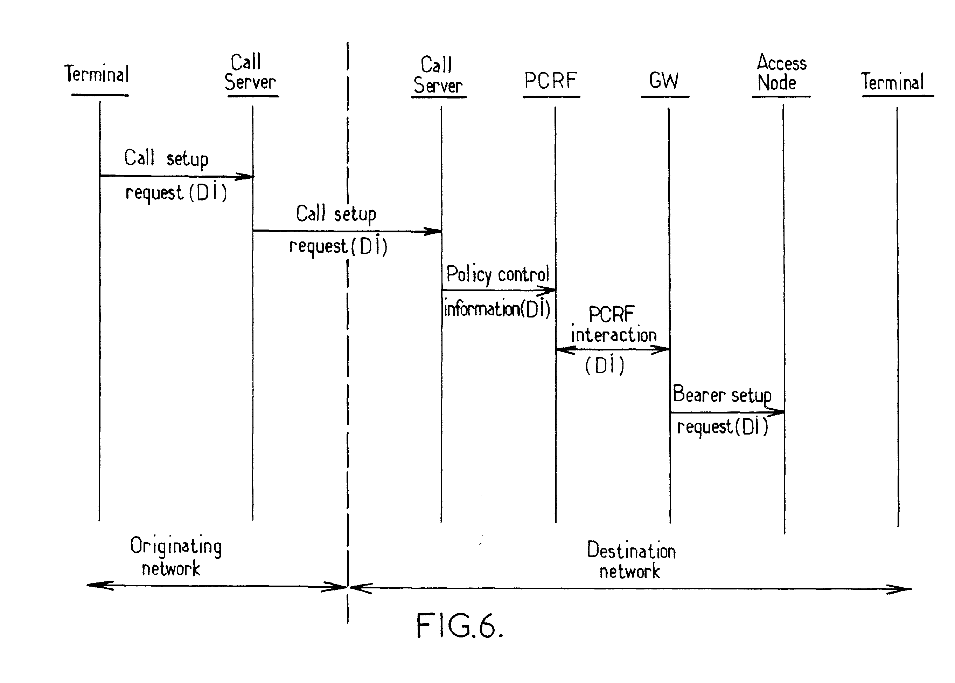

As a second example, FIGs 5 and 6 show possible signaling for transmitting the information from which a packet transmission delay over an upstream subpart of the packet switched system is derivable, as far as the access node of the destination subpart of the network which includes the packet scheduler.

First the calling terminal sends a call setup request to a call server of its network (e.g. a CSCF in IMS technology). The request includes the DI information.

Then the call setup request is forwarded from that call server to the call server of the network to which the called terminal belongs (destination server).

In the scenario shown in FIG.5, the call setup request including DI is further forwarded to the destination terminal.

Then, upon attach or PDP (Packet Data Protocol) context activation, the destination terminal provides a gateway GW of its network with the DI information.

Finally, the gateway GW instructs the access node with which the destination terminal will communicate and which includes the packet scheduler, of the DI information.

The packet scheduler can thus use the DI information as explained above.

In the alternative scenario of FIG.6, the call server of the originating network sends policy control information to a PCRF (Policy and Charging Rules Function) server of the destination network. This message includes the DI information.

Upon reception, the PCRF authorizes the delay relating to the DI information and passes the DI information to the gateway GW in a procedure of PCRF interaction.

Then, as previously, the gateway GW instructs the access node with which the destination terminal will communicate and which includes the packet scheduler, of the DI information.

The packet scheduler can thus use the DI information as explained above.

A third example of a type of transmission of the DI information as far as the packet scheduler is mentioned hereafter, where the destination network comprising the packet scheduler is a UMTS (or LTE) network.

When the CN (Core Network) of the destination network knows the DI information, it sends it to the RNC (Radio Network Controller) under which responsibility the destination UE is. This can be done over the lu interface, in an appropriate message of the RANAP (Radio Access Network Application Part) protocol. As an example, the DI information may be inserted in a field of a radio bearer setup request.

Then, the RNC sends the DI information to the Node B (comprising the packet scheduler) under the coverage of which the destination UE is. This can be done over the lub interface, in an appropriate message of the NBAP (Node B Application Part) protocol. As an example, the DI information may be inserted in a field of a forwarded radio bearer setup request.

As an alternative, the DI information could be sent from the CN directly to the destination UE, and then from the destination UE to the Node B in an uplink message.

Note that the examples described above relate to a packet transmission or communication to the destination terminal, which may be referred to as a mobile terminating call.

But where the packet transmission is originated by the terminal of the first subpart of the packet switched system to which the packet scheduler belongs, other procedures may be carried out to inform the packet scheduler of the DI information, as will appear to one skilled in the art.

Also many other possibilities would be suitable as well in receiving the DI information from the second subpart of the packet switched system, as will appear to one skilled in the art.

Besides, the DI information may be obtained in a different way, i.e. without being transmitted from the second subpart of the packet switched system. As an example, it may result from an analysis of received messages, performed at the first subpart of a packet switched system.

## Claims

1. A method for scheduling packets for transmission with respect to users (1'-3') over shared resource of a first subpart (N1) of a packet switched system, the method comprising with respect to each user:
- obtaining information (DI) relating to at least one second subpart (N2,N3,IP) of the packet switched system over which packets are transmitted with respect to said user, a packet transmission delay over said at least one second subpart of the packet switched system being derivable from said information ; and
- determining, depending on the packet transmission delay derived from said information, a maximum time (DB) in which packets must be transmitted with respect to said user over the shared resource of said first subpart of the packet switched system.

2. The method as claimed in claim 1, wherein the obtained information (DI) relating to the at least one second subpart (N2,N3,IP) of the packet switched system comprises an indication of a technology used in said at least one second subpart of the packet switched system.

3. The method as claimed in claim 1 or 2, wherein the obtained information (DI) relating to the at least one second subpart (N2,N3,IP) of the packet switched system comprises an indication of an estimate of a packet transmission delay over said at least one second subpart of the packet switched system.

4. The method as claimed in any one of the foregoing claims, wherein obtaining information (DI) relating to at least one second subpart (N2,N3,IP) of the packet switched system comprises receiving said information from the at least one second subpart of the packet switched system.

5. The method as claimed in any one of the foregoing claims, wherein at least some of said packets for transmission with respect to users (1'-3') are transmitted to the users.

6. The method as claimed in any one of the foregoing claims, wherein at least some of said packets for transmission with respect to users (1'-3') are transmitted from the users.

7. The method as claimed in any one of the foregoing claims, wherein at least some of said packets for transmission with respect to users (1'-3') are transmitted within the framework of a voice call.

8. The method as claimed in any one of the foregoing claims, wherein determining, depending on said packet transmission delay derived from said information (DI), a maximum time (DB) in which packets must be transmitted with respect to said user over the shared resource of said first subpart (N1) of the packet switched system comprises subtracting said packet transmission delay from a reference maximum delay for transmission over the whole packet switched system.

9. A packet switched system arranged for implementing the method as claimed in any one of the foregoing claims.

10. A packet scheduler (S) for scheduling packets for transmission with respect to users (1'-3') over shared resource of a first subpart (N1) of a packet switched system according to the method as claimed in any one of the foregoing claims, the packet scheduler comprising with respect to each user:
- means for obtaining information (DI) relating to at least one second subpart (N2,N3,IP) of the packet switched system over which packets are transmitted with respect to said user, a packet transmission delay over said at least one second subpart of the packet switched system being derivable from said information ; and
- a determination module for determining, depending on the packet transmission delay derived from said information, a maximum time (DB) in which packets must be transmitted with respect to said user over the shared resource of said first subpart of the packet switched system.

11. A computer program product comprising code instructions arranged for carrying out the method as claimed in any one of the foregoing claims, when loaded and run on computer means.
